# FASCICULE DE BREVET EUROPEEN

(11) **EP 3 892 540 B1**
(45) Date de publication et mention de la délivrance du brevet: **07.08.2024**
(21) Numéro de dépôt: 21166862.9
(22) Date de dépôt: 03.04.2021
(51) Int. Cl.: B64D 13/00, B29C 45/37, B64D 33/02, F16L 57/00, B29K 105/12, B29L 31/30, F16L 9/00, F16L 43/00

(54) **PIECE MOULEE THERMOPLASTIQUE, SON PROCEDE DE FABRICATION ET CONDUIT L'INCORPORANT**
THERMOPLASTISCHES FORMTEIL, SEIN HERSTELLUNGSVERFAHREN UND LEITUNG, DIE ES ENTHÄLT
THERMOPLASTIC MOULDED PART, METHOD FOR MANUFACTURING SAME AND CONDUIT INCLUDING SAME

(30) Priorité: 08.04.2020 FR 2003524
(43) Date de publication de la demande: 13.10.2021
(73) Titulaire: HUTCHINSON, 75008 Paris (FR)
(72) Inventeur: LEGEAIS, Pierre, 37300 JOUE LES TOURS (FR); VOILLEQUIN, Baptiste, 77590 BOIS LE ROI (FR)
(74) Mandataire: Plasseraud IP

(56) Documents cités:
- FR-A1- 3 065 438
- US-A- 5 048 572
- US-A1- 2010 089 484
- US-A1- 2010 181 434
- US-A1- 2016 273 696
- US-A1- 2019 101 134
- KUBOKI TAKASHI ET AL: "An extrusion method of tube with spiral inner fins by utilizing generation of spiral outer fins/grooves", CIRP ANNALS, ELSEVIER BV, NL, CH, FR, vol. 67, no. 1, 24 April 2018 (2018-04-24), pages 305 - 308, XP085415993, ISSN: 0007-8506, DOI: 10.1016/J.CIRP.2018.04.023

## Description

### Domaine technique

L'invention concerne une pièce moulée thermoplastique apte à constituer un conduit d'un véhicule aérien ou spatial, son procédé de fabrication et ce conduit qui comprend ladite pièce. L'invention s'applique d'une manière générale à tout conduit essentiellement constitué de ladite pièce moulée thermoplastique qui est apte à résister à une fissuration générée par des impacts d'outils lors d'opérations d'installation ou de maintenance à l'intérieur du véhicule, ce conduit étant en particulier adapté pour le transfert d'un fluide tel que de l'air et pouvant avantageusement former tout ou partie d'une prise d'air par exemple de type diffuseur d'entrée d'air (« inlet air diffuser » en anglais) pour assurer la climatisation de la cabine d'un aéronef tant en vol qu'au sol, étant précisé que l'invention peut s'appliquer à d'autres types de conduits véhiculant un fluide liquide ou gazeux et susceptibles d'être le siège de chocs externes, ainsi qu'à des conduits de carburant, des fixations diverses et des pièces semi-structurales.

### Technique antérieure

FR 3 065 438 A1 présente un système de climatisation destiné à alimenter la cabine d'un aéronef en air climatisé, comprenant une prise d'air qui est destinée à être montée sous un carénage ventral d'un aéronef et qui comprend à cet effet une écope (« scoop » en anglais) connectée à une fenêtre du carénage, et une gaine raccordée en amont à un parc de conditionnement d'air et en aval à l'écope.

On a cherché à remplacer les matériaux métalliques conventionnellement utilisés pour ces prises d'air par des matériaux thermoplastiques. Or, de manière connue, les conduits thermoplastiques et composites à matrice thermoplastique doivent présenter un compromis entre une tenue mécanique satisfaisante due à leur renforcement et/ou à leur rigidité, un allégement significatif obtenu par une épaisseur réduite et/ou des matériaux peu denses et, dans des applications telles que les prises d'air internes aux aéronefs, qui sont susceptibles d'être endommagées par des impacts d'outils lors de l'installation ou la maintenance du conduit à l'intérieur de l'aéronef, une résistance aux chocs généralement obtenue par une structure déformable mais non cassable ou par un renforcement spécifique.

WO 99/24749 A1 divulgue un article, tel qu'un avion ou un conduit par exemple en plastique, qui présente une traînée réduite lors de l'écoulement d'un fluide par ou à travers l'article. L'article comprend à cet effet une surface interne ou externe ayant une pluralité de parties concaves et/ou convexes. Ce document ne concerne pas la résistance d'un conduit à la fissuration résultant d'impacts.
US 2010/089484 A1 concerne un dispositif de protection d'une extrémité mâle d'un composant d'un raccord tubulaire fileté pour le forage et l'exploitation de puits d'hydrocarbures, qui est pourvu extérieurement d'au moins un filetage et comprend une partie terminale libre. Le dispositif comprend
i) un corps de protection réalisé sous la forme d'un premier manchon et agencé pour protéger au moins une partie du filetage extérieur et la partie terminale libre,
ii) un élément d'étanchéité à positionner au contact d'abord du composant, au moins au niveau d'une portion située en aval du filetage extérieur de l'extrémité mâle, et d'autre part avec le corps de protection pour assurer une première étanchéité en aval du filetage extérieur, et
iii) un mécanisme de fixation déplaçant l'élément d'étanchéité et/ou le corps de protection radialement vers le composant, définissant des positions d'ouverture et de fermeture du dispositif dans lesquelles l'élément d'étanchéité et/ou le corps de protection sont respectivement hors contact et en contact étanche avec le composant.
US 5 048 572 A concerne un tube thermorétractable qui fournit un amortissement des vibrations particulièrement utile pour un équipement motorisé à main. Le tube est extrudé avec des arêtes internes sur toute sa longueur, qui, lorsqu'elles sont thermorétractées sur un substrat, fournissent des poches d'air pour l'amortissement des vibrations. Les modes de réalisation décrits comprennent de multiples couches d'un tel matériau et de multiples couches avec des couches lisses et texturées extrudées concentriquement sur les couches primaires d'amortissement des vibrations.
KUBOKI TAKASHI ET AL, "An extrusion method of tube with spiral inner fins by utilizing génération of spiral outer fins/grooves", CIRP ANNALS, ELSEVIER BV, NL, CH, FR, (20180424), vol. 67, no. 1, doi:10.1016/J.CIRP.2018.04.023, ISSN 0007-8506, pages 305 - 308, XP085415993, concerne un procédé d'extrusion pour la fabrication d'un tube métallique à ailettes intérieures en spirale. Les ailettes en spirale sont formées en générant des ailettes ou rainures extérieures en spirale, qui entraînent le métal à se déplacer circonférentiellement avec une déformation en torsion.

A la connaissance de la Demanderesse, il n'existe pas à l'heure actuelle de conduit thermoplastique ou composite à matrice thermoplastique formant une prise d'air pour système de climatisation d'un aéronef, le conduit étant capable de résister d'une manière satisfaisante à une fissuration générée par des impacts provoqués par des chutes d'outils ou autres chocs pouvant survenir lors d'opérations d'installation ou de maintenance de l'aéronef.

### Exposé de l'invention

Un but de la présente invention est de proposer une pièce moulée à matrice thermoplastique apte à constituer un conduit équipant un véhicule aérien ou spatial, la pièce présentant une surface externe au moins en partie à symétrie de révolution, qui remédie notamment aux inconvénients précités.

A cet effet, une pièce moulée selon l'invention est définie à la revendication 1, sa surface externe comprenant une multitude de dépressions venues de moulage et reliées deux à deux entre elles par des crêtes, et:
- chacune des dépressions présente une surface concave globalement sphérique ou cylindrique et une dimension transversale maximale D entre les crêtes deux à deux adjacentes comprise entre 3 mm et 10 mm, mesurée dans une direction d perpendiculaire aux crêtes délimitant chaque dépression, et
- chacune des crêtes présente un sommet de largeur transversale L mesurée suivant ladite direction d, avec L < D.

On notera qu'une pièce moulée selon l'invention, qui est de préférence moulée par injection, présente du fait du moulage mis en oeuvre un plan de joint (plan de démoulage). Cette pièce moulée peut présenter deux extrémités ouvertes qui présentent chacune indépendamment l'une de l'autre un pourtour d'extrémité globalement circulaire, elliptique ou polygonal.

Par « dépressions », on entend dans la présente description des creux, renfoncements ou alvéoles définissant des emplacements macroscopiques en retrait des crêtes sur la surface externe, conférant ainsi une structure macro-texturée à ladite surface externe. Les dépressions, identiques ou différentes, forment des creux concaves de section globalement arrondie. La dimension transversale maximale D entre les crêtes mesurée dans une direction d perpendiculaire aux crêtes délimitant chaque dépression, définit ainsi la plus grande dimension transversale de chaque dépression (e.g. le diamètre de chaque dépression, lorsque cette dernière est de forme cylindrique ou sphérique) mesurée perpendiculairement à l'axe longitudinal ou ligne de symétrie de chaque crête adjacente.

Par « crêtes », on entend dans la présente description des reliefs, faîtes ou rebords surmontant les dépressions à la manière de reliefs également macroscopiques sur ladite surface externe. Les crêtes, identiques ou différentes, ont leurs sommets respectifs (les plus éloignés des dépressions) qui peuvent être globalement plans, linéaires ou incurvés (par exemple des sommets globalement convexes ou concaves). La largeur transversale L de chaque sommet de crête est également mesurée perpendiculairement à l'axe longitudinal ou ligne de symétrie de chaque crête adjacente, avec chaque sommet de crête qui est plus étroit que chaque dépression adjacente dans ladite direction d (condition L < D).

La Demanderesse a démontré que cet agencement de dépressions et de crêtes venues de moulage permet d'améliorer de manière significative la résistance de la pièce à une fissuration due à des impacts en comparaison d'une pièce constituée d'un même matériau mais à surface externe dépourvue de dépressions et de crêtes (i.e. sans creux, ni reliefs), comme démontré dans les exemples ci-après de l'invention et comparatifs pour des pièces moulées constituées d'un même matériau composite à matrice thermoplastique.

On notera également que cet agencement selon l'invention, combiné à un matériau thermoplastique renforcé approprié pour la pièce moulée, permet de conférer à celle-ci une résistance satisfaisante à des impacts en flexion.

Avantageusement, chacune des dépressions présente ladite surface concave globalement sphérique (i.e. définie par un rayon de courbure R) ou globalement cylindrique (i.e. définie par une directrice formant une ligne courbe globalement en arc de cercle de rayon de courbure R et une génératrice axiale pour le conduit définissant la longueur de chaque dépression), avec de préférence L < 0,5 D et par exemple L < 0,2 D, voire L < 0,1 D.
Par « globalement sphérique », on entend ici une surface concave définissant un secteur ouvert de sphère par exemple sensiblement hémisphérique, et par « globalement cylindrique », on entend un secteur ouvert de cylindre par exemple sensiblement hémicylindrique.

On notera que les dépressions selon l'invention peuvent présenter des surfaces en creux de profils variables, afin de faire varier l'amortissement et la sensibilité des crêtes en réponse aux impacts, comme cela sera expliqué ci-après.

Encore plus avantageusement, la surface concave peut être définie par ledit rayon de courbure R relié à ladite plus grande dimension transversale D par 0,5 D < R < 2 D, de préférence 0.7 D < R < 1,5 D.

Selon une autre caractéristique générale de l'invention, la pièce peut présenter une différence d'épaisseur, mesurée entre chacune des crêtes et un fond des dépressions adjacentes, de la surface externe à une surface interne de la pièce radialement opposée, comprise entre 0,2 mm et 2 mm, de préférence entre 0,3 mm et 1,3 mm.

Selon une autre caractéristique générale de l'invention, les dépressions peuvent être avantageusement identiques et régulièrement espacées en formant au moins une rangée périphérique de dépressions entre deux extrémités ouvertes de la pièce, la ou chaque rangée pouvant s'étendre sur un pourtour de la surface externe avec un pas de répétition de valeur égale à D+L entre deux dépressions consécutives dans la ou chaque rangée.

On notera que les dépressions peuvent former :
- dans un premier mode de réalisation de l'invention, une multitude de rangées périphériques dans le cas où la surface concave de chaque dépression est globalement sphérique, ces dépressions pouvant être alors alignées sur des pourtours de la surface externe de la pièce, ou
- dans un second mode de réalisation de l'invention, une unique dite rangée périphérique dans le cas où la surface concave de chaque dépression est globalement cylindrique, étant définie par un secteur de cylindre d'axe longitudinal le long de la surface externe de la pièce globalement à symétrie de révolution.

Avantageusement, ladite différence d'épaisseur de la pièce telle que définie ci-dessus peut être comprise entre :
- 0,8 mm et 1,3 mm lorsque ledit pas entre dépressions est compris entre 6 mm et 8 mm avec de préférence 0.7 D < R < D, ou
- 0,3 mm et 0,7 mm lorsque ledit pas entre dépressions est compris entre 3 mm et 5 mm avec de préférence D < R < 1,3 D.

Selon le premier mode de l'invention où les dépressions forment plusieurs dites rangées périphériques espacées sur la surface externe, les dépressions de chaque rangée sont formées de manière discontinue sur la surface externe à la manière d'alvéoles d'une balle de golf.

Selon le second mode de l'invention où les dépressions forment une unique rangée périphérique sur la surface externe, les dépressions de ladite rangée présentent chacune une surface concave globalement hémicylindrique et continue sur la surface externe.

Selon une autre caractéristique générale de l'invention, la pièce peut être constituée d'une composition polymérique à base d'au moins un polymère thermoplastique choisi parmi les polyamides (PA), les poly(sulfure de phénylène) (PPS), les polyétherimides (PEI), les polyphtalamides (PPA), les polyphénylsulfones (PPSU), les polyétheréthercétones (PEEK), les polyaryléthercétones (PAEK), les polyfluorures de vinylidène (PVDF).

De préférence, ledit au moins un polymère thermoplastique est choisi parmi les polyétheréthercétones (PEEK) et les polyaryléthercétones (PAEK).

Encore plus préférentiellement, ledit au moins un polymère thermoplastique est un polyétheréthercétone (PEEK).

Selon une autre caractéristique générale de l'invention, la composition peut comprendre un renfort comprenant :
- une charge renforçante dispersée dans la composition, par exemple choisie parmi les charges organiques comme par exemple les noirs de carbone et les nanotubes de carbone et les charges inorganiques, et/ou
- des fibres de renforcement par exemple choisies parmi les fibres de verre et les fibres de carbone formant un renforcement unidirectionnel ou tissé,
le renfort comprenant de préférence des fibres de verre discontinues, par exemple selon une fraction massique comprise entre 20 et 40 %.

Encore plus préférentiellement, ledit au moins un polymère thermoplastique est choisi parmi les polyétheréthercétones (PEEK) et les polyaryléthercétones (PAEK) et ledit renfort comprend des fibres de verre discontinues selon une fraction massique comprise entre 25 et 35 %.

On notera qu'une composition selon l'invention peut en outre comprendre d'autres additifs usuellement employés dans les compositions thermoplastiques, tels que des colorants, à titre non limitatif.

Selon une autre caractéristique générale de l'invention, l'agencement des dépressions et des crêtes peut être configuré pour se déformer lors des impacts en les amortissant par écrasement des crêtes, de sorte à faciliter la détection d'une fissure dans la pièce à une énergie d'impact réduite, en comparaison de l'énergie d'impact requise pour l'obtention d'une fissure sur une pièce de même épaisseur et constituée du même matériau mais dépourvue dudit agencement.

Un procédé de fabrication selon l'invention d'une pièce telle que définie ci-dessus est tel que l'on met en oeuvre une étape de moulage en injectant, dans un moule configuré pour former en négatif lesdites dépressions et lesdites crêtes, une composition polymérique comprenant ladite matrice thermoplastique et éventuellement un renfort comprenant une charge renforçante dispersée dans la composition et/ou des fibres de renforcement.

De préférence, l'étape de moulage comprend l'injection de la composition dans laquelle ledit au moins un polymère thermoplastique est choisi parmi les polyamides (PA), les poly(sulfure de phénylène) (PPS), les polyétherimides (PEI), les polyphtalamides (PPA), les polyphénylsulfones (PPSU), les polyétheréthercétones (PEEK), les polyaryléthercétones (PAEK), les polyfluorures de vinylidène (PVDF), et ledit renfort comprend des fibres de verre discontinues par exemple selon une fraction massique comprise entre 20 et 40 %.

Un conduit pour véhicule aérien ou spatial selon l'invention est configuré pour être monté à l'intérieur du véhicule en y véhiculant un fluide liquide ou gazeux, et le conduit comprend ou est constitué d'une pièce moulée telle que définie ci-dessus qui est apte à résister à une fissuration de la pièce due à des impacts d'outils lors d'opérations d'installation ou de maintenance à proximité du conduit.

On notera qu'un conduit selon l'invention peut être avantageusement monocouche, étant constitué de ladite composition moulée et étant optionnellement cintré et/ou coudé.

Selon un exemple de réalisation de l'invention, le conduit forme une prise d'air (e.g. un diffuseur d'entrée d'air froid) pour une unité de climatisation du véhicule de sorte à alimenter en air climatisé au moins une cabine ou habitacle du véhicule, le conduit comprenant :
- une première extrémité ouverte de pourtour globalement circulaire ou elliptique, adaptée pour être raccordée de manière étanche, via un joint d'étanchéité, à une canalisation de l'unité de climatisation débouchant à l'intérieur de la cabine ou habitacle, et
- une seconde extrémité ouverte qui présente une section élargie par rapport à celle de la première extrémité et de pourtour par exemple globalement polygonal ou oblong, qui est adaptée pour être raccordée à un échangeur thermique air-air du véhicule, par exemple externe à la cabine ou habitacle.

De préférence, le conduit selon cet exemple de l'invention présente une section de passage qui croît de la première extrémité à la seconde extrémité, le conduit étant pourvu de moyens de raccordement à ladite unité de climatisation. Ce conduit peut être un diffuseur d'entrée d'air de type « scoop duct » ou « inlet diffuser », à titre non limitatif.

On notera d'une manière générale qu'un conduit selon l'invention peut être adapté pour le transfert d'un fluide liquide ou gazeux autre que l'air, comme par exemple un carburant.

### Brève description des dessins

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
**Fig. 1**

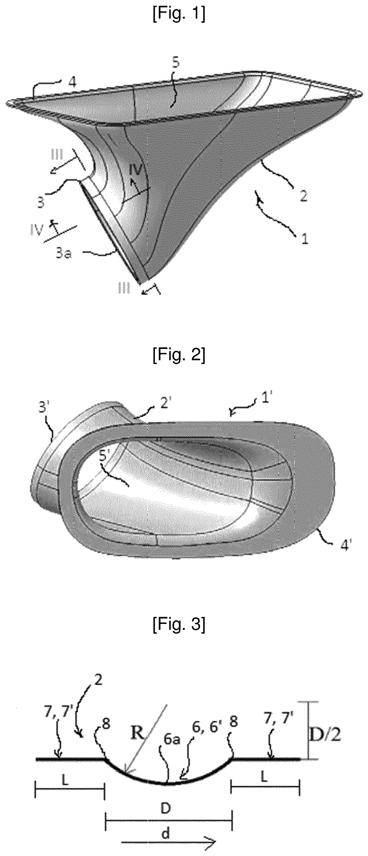

   [fig. 1] est une vue latérale en perspective d'une pièce selon un exemple de l'invention formant un conduit d'air de type diffuseur d'entrée d'air pour aéronef, l'agencement des dépressions et crêtes n'étant pas visible.
**Fig. 2**
   [fig. 2] est une vue latérale en perspective d'une pièce selon un autre exemple de l'invention formant un autre conduit d'air pour aéronef de type à écope (« scoop » en anglais), l'agencement des dépressions et crêtes n'étant pas non plus visible.
**Fig. 3**
   [fig. 3] est une vue schématique partielle en section dans le plan III-III de la figure 1 montrant un exemple d'agencement d'une dépression et de deux crêtes adjacentes d'une surface externe, exemple commun aux deux modes de réalisation de l'invention à dépressions discontinues et continues.
**Fig. 4**

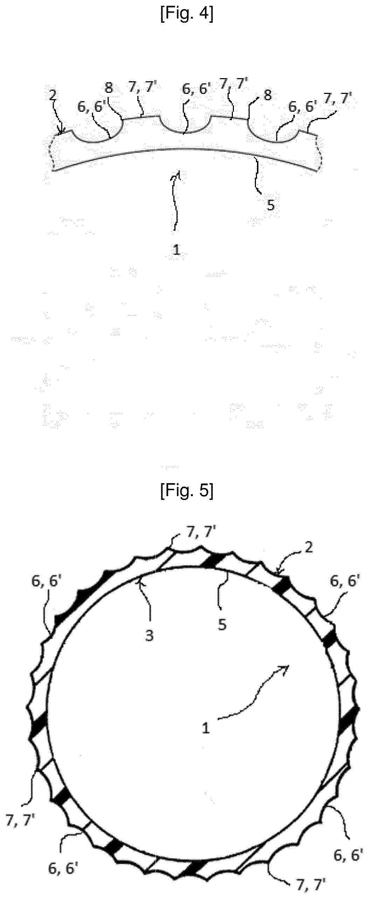

   [fig. 4] est une vue schématique partielle en section transversale montrant de manière plus complète l'exemple d'agencement transversal de la figure 3 pour les deux modes de l'invention, et montant en outre un exemple d'agencement longitudinal des dépressions et crêtes dans le plan IV-IV de la figure 1 pour le premier mode de l'invention à dépressions discontinues.
**Fig. 5**
   [fig. 5] est une vue schématique complète en section transversale d'une pièce selon un exemple de l'invention dans le plan V-V de la figure 2 ou le plan III-III de la figure 1, montrant un exemple d'agencement des dépressions et crêtes commun aux deux modes de l'invention sur un pourtour circonférentiel de la pièce.
**Fig. 6**

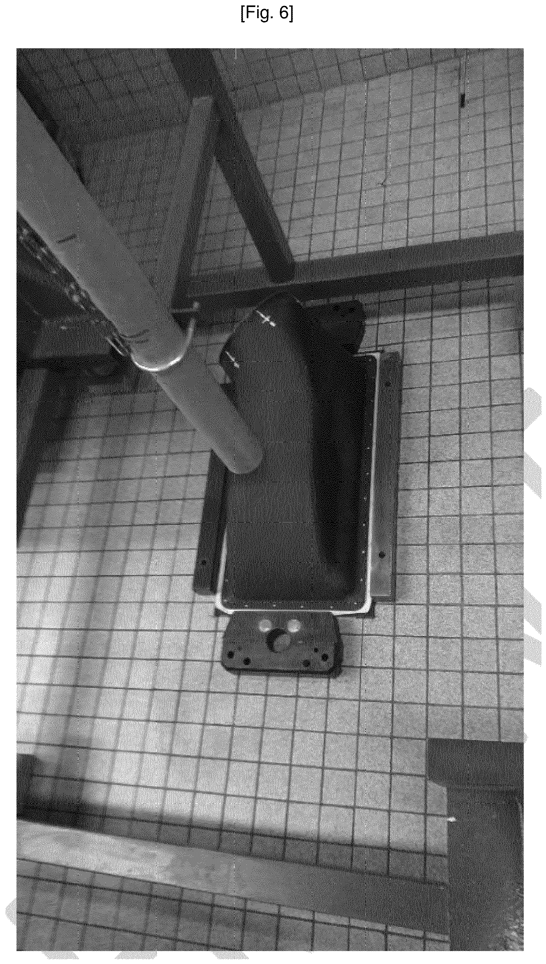

   [fig. 6] est une photographie montrant en vue de dessus et en perspective un dispositif d'évaluation du comportement à l'impact utilisé pour tester des pièces et éprouvettes « témoin » et selon les deux modes de l'invention, comportant un impacteur avec variation de l'énergie d'impact.
**Fig. 7**

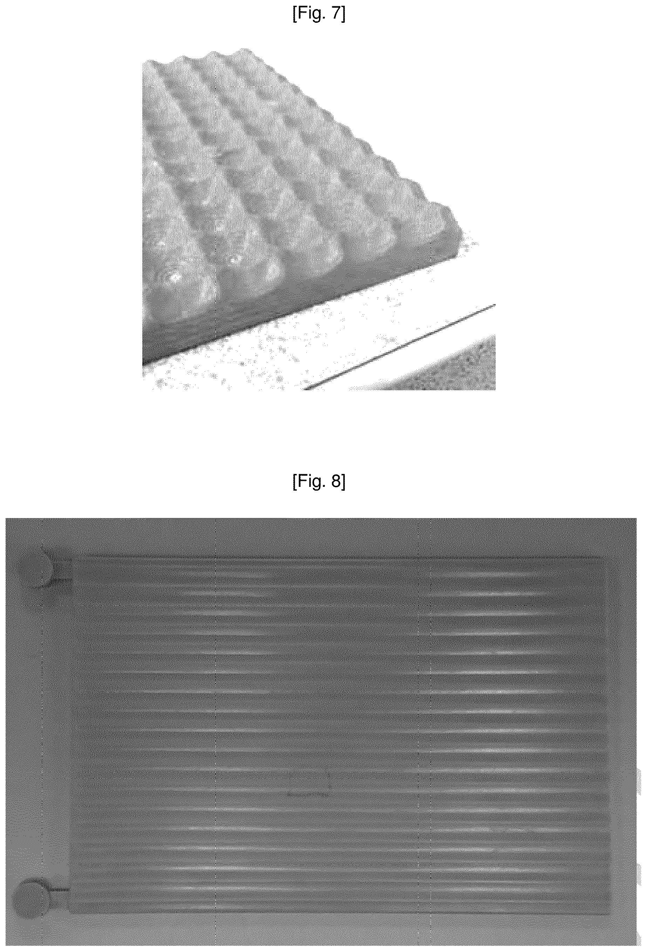

   [fig. 7] est une photographie montrant en vue de dessus et en perspective un exemple de réalisation d'un agencement selon le premier mode de l'invention à dépressions et crêtes discontinues.
**Fig. 8**
   [fig. 8] est une photographie montrant en vue de dessus la surface externe d'une première éprouvette A2 formée d'une plaque moulée dont la surface externe est pourvue d'un agencement resserré de dépressions et crêtes continues selon le second mode de l'invention, cette éprouvette étant constituée d'un matériau selon l'invention et ayant été impactée à deux reprises par le dispositif de la figure 6 avec une énergie d'impact de 3,5 J.
**Fig. 9**

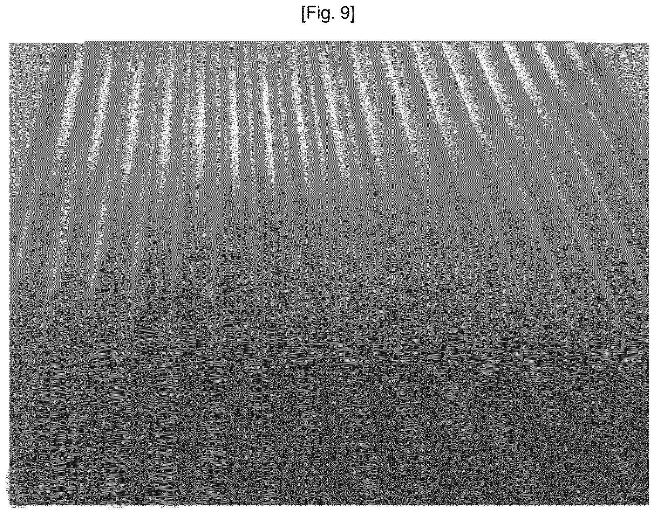

   [fig. 9] est une photographie détaillant en perspective les dépressions et crêtes continues de la première éprouvette A2 de la figure 8.
**Fig. 10**

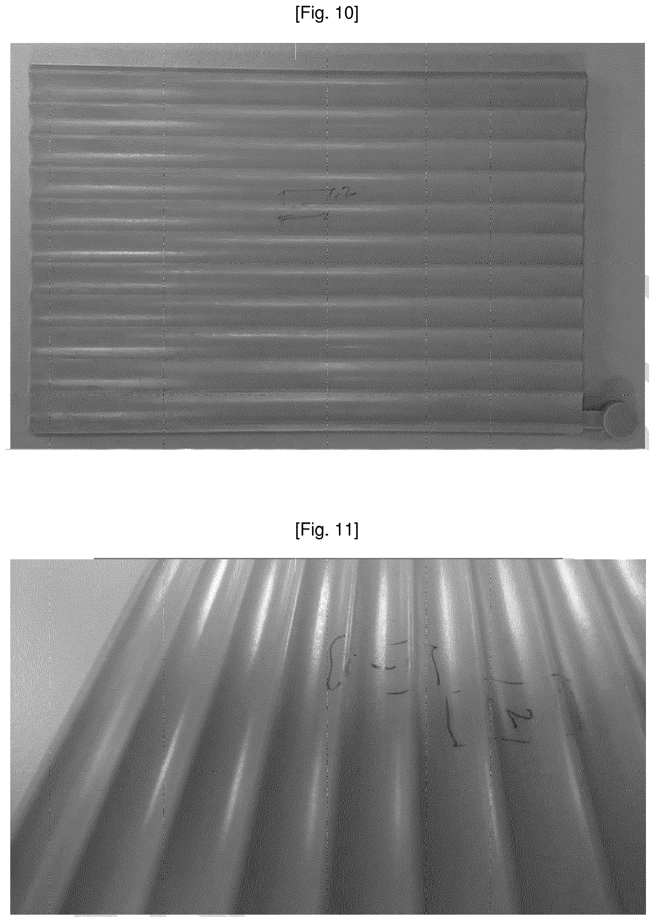

   [fig. 10] est une photographie montrant en vue de dessus la surface externe d'une seconde éprouvette B7 formée d'une plaque moulée dont la surface externe est pourvue d'un autre agencement plus espacé de dépressions et crêtes continues selon le second mode de l'invention, cette éprouvette étant constituée d'un matériau selon l'invention et ayant été impactée à deux reprises par le dispositif de la figure 6 avec une énergie d'impact de 3,8 J.
**Fig. 11**
   [fig. 11] est une photographie détaillant en perspective les dépressions et crêtes continues de la seconde éprouvette B7 de la figure 10.
**Fig. 12**

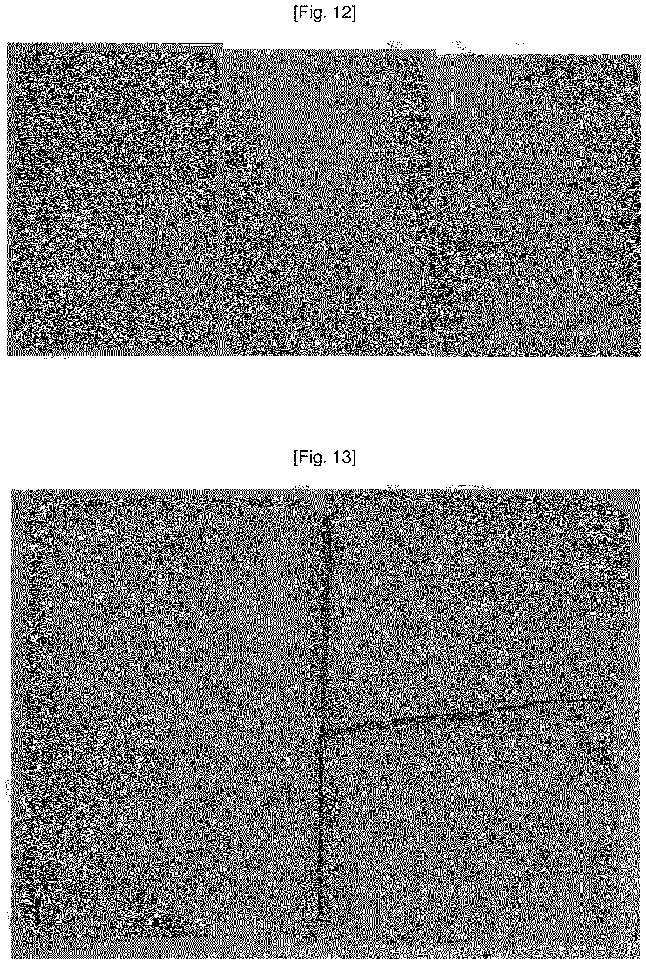

   [fig. 12] contient trois photographies montrant en vue de dessus les surfaces externes de trois éprouvettes « témoin » C4, C5, C6 formées de plaques moulées de 2 mm d'épaisseur dont la surface externe est plane et constituées du même matériau selon l'invention, avec celles de gauche et du milieu impactées à deux reprises à une énergie d'impact de 2 J et celle de droite à une reprise à énergie d'impact de 2 J.
**Fig. 13**
   [fig. 13] contient deux photographies montrant en vue de dessus les surfaces externes de deux éprouvettes « témoin » D2, D4 formées de plaques moulées de 3 mm d'épaisseur dont la surface externe est plane et constituées du même matériau selon l'invention, avec celles de gauche et de droite impactées à deux reprises à une énergie d'impact de 2 J et 2,5 J, respectivement.
**Fig. 14**

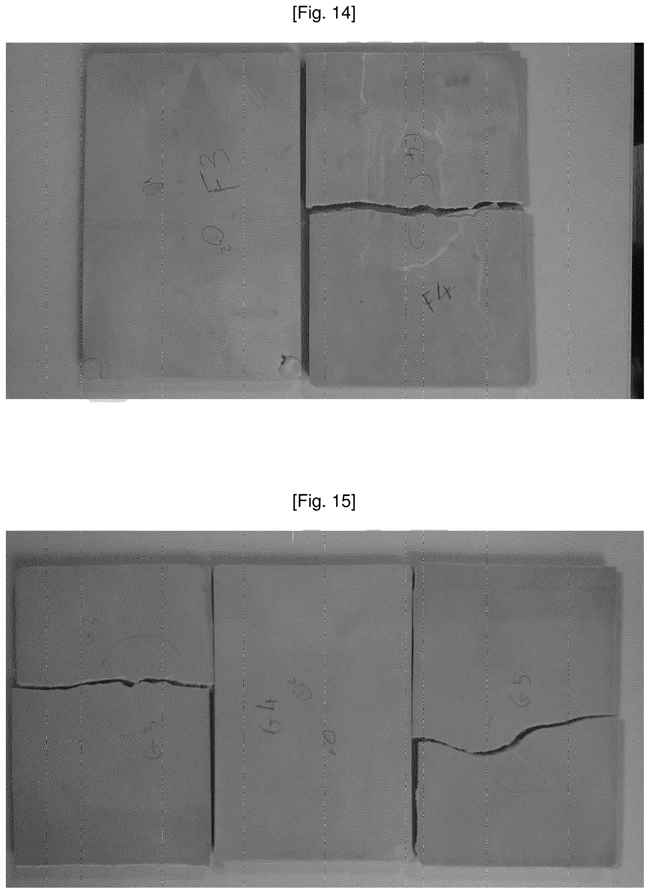

   [fig. 14] contient deux photographies montrant en vue de dessus les surfaces externes de deux éprouvettes « témoin » E3, E4 formées de plaques moulées de 4 mm d'épaisseur dont la surface externe est plane et constituées du même matériau selon l'invention, avec celles de gauche et de droite impactées à deux reprises à une énergie d'impact de 3,5 J et 4 J, respectivement.
**Fig. 15**
   [fig. 15] contient trois photographies montrant en vue de dessus les surfaces externes de trois éprouvettes « témoin » F3, F4, F5 formées de plaques moulées de 5 mm d'épaisseur dont la surface externe est plane et constituées du même matériau selon l'invention, avec celles de gauche, du milieu et de droite impactées à une énergie d'impact de 8 J, 7 J et 7,5 J, respectivement.

Le conduit 1 selon l'exemple de l'invention illustré à la figure 1, moulé de préférence par injection et constitué d'une composition thermoplastique ou composite à matrice thermoplastique telle que celle définie ci-dessus, est en particulier adapté pour former une prise d'air à raccorder à un circuit d'une unité de climatisation d'air équipant un aéronef pour climatiser sa cabine lorsque l'aéronef se trouve en vol et au sol (i.e. en permanence, tant que la cabine de l'aéronef est occupée). Le conduit 1 présente une surface externe 2 comprenant dans cet exemple :
- une extrémité inférieure 3 ouverte de pourtour circulaire pourvue d'un joint d'étanchéité 3a pour son raccordement à une canalisation ou tuyau de l'unité de climatisation d'air débouchant à l'intérieur de la cabine (non visible), et
- une extrémité supérieure 4 ouverte de pourtour globalement rectangulaire à coins arrondis, adaptée pour être raccordée de manière étanche à un échangeur thermique air-air du véhicule (typiquement entre l'air chaud provenant du ou des compartiment(s) moteur(s) et l'air froid extérieur), cet échangeur étant par exemple localisé dans chaque aile de l'aéronef.

L'extrémité inférieure 3 se prolonge par une partie inférieure de la surface externe 2 à symétrie de révolution, globalement cylindrique cintrée, qui se prolonge progressivement et continûment par une partie supérieure globalement en tronc de pyramide de base rectangulaire se terminant par l'extrémité supérieure 4.

Le conduit 1' selon l'exemple de l'invention illustré à la figure 2, tel qu'un diffuseur d'entrée d'air de type « scoop duct », se distingue essentiellement du conduit 1 précité de la figure 1, en ce que sa surface externe 2' comprend, à l'opposé de son extrémité inférieure 3' à raccorder à la canalisation ou tuyau de l'unité de climatisation d'air (similaire à l'extrémité 3 de la figure 1), une extrémité supérieure 4' ouverte à raccorder à l'échangeur air-air de l'aéronef qui présente un pourtour globalement oblong et qui est pourvue d'un rebord plan de largeur supérieure à celle du rebord de l'extrémité supérieure 4. L'extrémité inférieure 3' se prolonge également par une partie inférieure globalement cylindrique cintrée, qui se prolonge progressivement par une partie supérieure évasée (de forme globalement en tronc de pyramide ou sensiblement tronconique) se terminant par l'extrémité supérieure 4.'

La surface interne 5, 5' du conduit 1, 1' peut présenter une géométrie lisse, contrairement à la surface externe 2, 2' qui, selon l'invention, comprend une multitude de dépressions 6, 6' venues de moulage et reliées deux à deux entre elles par des crêtes 7, 7' (visibles aux figures 3-6 et 8-11), où:
- chaque dépression 6, 6' présente une plus grande dimension transversale D entre les crêtes 7, 7' deux à deux adjacentes comprise entre 3 mm et 10 mm, mesurée dans une direction d perpendiculaire aux crêtes 7, 7' délimitant chaque dépression 6, 6', et
- chaque crête 7, 7' présente un sommet de largeur transversale L mesurée suivant ladite direction d, avec L < D.

Dans les exemples des figures 3, 4 et 5 communs au premier mode de l'invention à dépressions discontinues (i.e. formées de secteurs globalement sphériques) et au second mode de l'invention à dépressions continues (i.e. formées de secteurs cylindriques d'axes parallèles), on voit que chaque dépression 6, 6' peut présenter une même surface concave sensiblement hémisphérique ou hémicylindrique de fond 6a et de rayon R, avec par 0,5 D < R < 2 D, de préférence 0.7 D < R < 1,5 D. Chaque dépression 6, 6' s'étend suivant la dimension D d'une arête de bord 8 d'une crête 7, 7' à une autre arête de bord 8 adjacente d'au moins une autre crête 7, 7' délimitant la dépression 6, 6', étant précisé que dans l'exemple schématique de la figure 5 les crêtes 7, 7' présentent chacune une largeur D moindre que la largeur D de chaque crête 7, 7' des figures 3 et 4 (en d'autres termes, les crêtes 7, 7' de la figure 5 sont moins aplaties, i.e. plus pointues que celles des figures 3 et 4).

Dans le premier mode de l'invention de la figure 7, on voit que les dépressions 6, 6' du conduit 1, 1' sont chacune à surface concave quasiment hémisphérique et que les crêtes 7, 7', relativement pointues (i.e. peu aplaties), présentent un sommet incurvé vers le bas entre deux crêtes 7, 7' adjacentes, avec les fonds 6a respectifs des dépressions 6, 6' qui définissent les points les plus radialement internes du conduit 1, 1' et les jonctions entre crêtes 7, 7' (dans l'exemple de la figure 7, entre quatre crêtes 7, 7' deux à deux perpendiculaires) qui définissent les points les plus radialement externes du conduit 1, 1', suivant une différence maximale d'épaisseur pour le conduit 1, 1' par exemple comprise entre 0,2 mm et 2 mm. On voit que ces dépressions 6, 6' sont ainsi arrangées suivant une multitude de rangées formées de manière espacée sur la surface externe 2, 2' à la manière d'alvéoles d'une balle de golf.

Dans le second mode de l'invention illustré aux photographies des figures 8-11 et dans le détail aux figures 3-5, on voit que les dépressions 6, 6' du conduit 1, 1' sont chacune à surface concave globalement hémicylindrique (les axes longitudinaux de symétrie formés par les génétratrices des demi-cylindres étant parallèles entre eux) et que les crêtes 7, 7', sensiblement plates et également parallèles entre elles, présentent chacune un sommet incurvé vers le bas entre deux crêtes 7, 7' adjacentes, avec les fonds 6a des dépressions 6, 6' qui définissent les points les plus radialement internes du conduit 1, 1' et les jonctions entre deux crêtes 7, 7' consécutives (voir figures 8-11) qui définissent les points les plus radialement externes du conduit 1, 1', suivant une différence maximale d'épaisseur pour le conduit 1, 1' par exemple comprise entre 0,3 mm et 1,3 mm.

### Essais sur des éprouvettes à surface externe selon l'invention

### Eprouvettes testées

On a préparé des premières éprouvettes parallélépipédiques moulées, par injection d'une même composition polymérique à matrice thermoplastique, de sorte que des premières éprouvettes texturées obtenues avaient chacune l'une de leurs deux grandes surfaces qui était texturée selon la figure 7 conformément au premier mode de l'invention (du fait de la cavité spécifique en négatif d'un premier moule d'injection), et que d'autres premières éprouvettes « témoin » avaient chacune leurs deux grandes surfaces lisses.

Chaque première éprouvette lisse présentait des dimensions de 950 mm x 950 mm x 7 mm et une masse de 46,6 g. Chaque première éprouvette texturée présentait des macro-alvéoles du type de celles d'une balle de golf, une masse de 48,4 g et des grandes surfaces de dimensions 950 mm x 950 mm avec une épaisseur définie par un filet moyen de 7 mm des macro-alvéoles.

On a préparé des secondes éprouvettes parallélépipédiques moulées A, B, C, D, E, F, par injection d'une même composition à matrice thermoplastique en PEEK renforcée par 30 % en masse de fibres de verre (matériau de dénomination commerciale Victrex^{®} 150GL30), les éprouvettes A et B ayant l'une de leurs deux grandes surfaces qui étaient conformes au second mode de l'invention des figures 8-11 (du fait de la cavité spécifique en négatif d'un second moule d'injection), et les éprouvettes C, D, E, F étant des éprouvettes « témoin » à grandes faces lisses selon les figures 12-15. Ces secondes éprouvettes A à F présentaient chacune des grandes surfaces de dimensions 120 mm x 80 mm.

Pour le moulage par injection de l'ensemble des éprouvettes, on a utilisé des moules de type à poinçon et matrice, en utilisant une pression maximale dans l'empreinte de chaque moule de 1500 bars environ, et une température dans chaque moule comprise entre 180 et 200°C.

Plus précisément, six éprouvettes A1 à A6 identiques présentaient chacune une grande surface texturée selon les figures 8-9 avec une période réduite (i.e. une fréquence élevée) pour la répétition de ses dépressions hémicylindriques d'axes longitudinaux de symétrie parallèles entre eux, chaque éprouvette A1-A6 présentant les caractéristiques détaillées au tableau 1 ci-dessous.

**[Tableau 1]**

| | |
|---|---|
| Epaisseur minimale (mm) | 2,5 |
| Epaisseur au sommet (mm) | 2,9 |
| Masse (g) | 38,9 |
| Ecartement entre appuis opposés de chaque éprouvette (mm) | 100 |
| Rayon de chaque dépression (mm) | 5 |
| Pas de répétition des dépressions (mm) | 4,36 |

Neuf éprouvettes B1 à B9 identiques présentaient chacune une grande surface texturée selon les figures 10-11 avec une période plus élevée (i.e. fréquence plus faible) que celle des figures 8-9 pour la répétition de ses dépressions hémicylindriques d'axes longitudinaux de symétrie parallèles entre eux, chaque éprouvette B1-B9 présentant les caractéristiques détaillées au tableau 2 ci-dessous.

**[Tableau 2]**

| | |
|---|---|
| Epaisseur minimale (mm) | 2,5 |
| Epaisseur au sommet (mm) | 3,6 |
| Masse (g) | 41,7 |
| Ecartement entre appuis opposés de chaque éprouvette (mm) | 100 |
| Rayon de chaque dépression (mm) | 5 |
| Pas de répétition des dépressions (mm) | 6,95 |

Six éprouvettes « témoin » C1-C6 identiques aux deux grandes surfaces lisses présentaient chacune les caractéristiques détaillées au tableau 3 ci-dessous.

**[Tableau 3]**

| | |
|---|---|
| Epaisseur (mm) | 2 |
| Masse (g) | 29,7 |
| Ecartement entre appuis opposés de chaque éprouvette (mm) | 100 |

Six éprouvettes « témoin » D1-D6 identiques aux deux grandes surfaces lisses présentaient chacune les caractéristiques détaillées au tableau 4 ci-dessous.

**[Tableau 4]**

| | |
|---|---|
| Epaisseur (mm) | 3 |
| Masse (g) | 44,25 |
| Ecartement entre appuis opposés de chaque éprouvette (mm) | 100 |

Cinq éprouvettes « témoin » E1-E5 identiques aux deux grandes surfaces lisses présentaient chacune les caractéristiques détaillées au tableau 5 ci-dessous.

**[Tableau 5]**

| | |
|---|---|
| Epaisseur (mm) | 4 |
| Masse (g) | 56,75 |
| Ecartement entre appuis opposés de chaque éprouvette (mm) | 100 |

Cinq éprouvettes « témoin » F1-F5 identiques aux deux grandes surfaces lisses présentaient chacune les caractéristiques détaillées au tableau 6 ci-dessous.

**[Tableau 6]**

| | |
|---|---|
| Epaisseur (mm) | 5 |
| Masse (g) | 73 |
| Ecartement entre appuis opposés de chaque éprouvette (mm) | 100 |

### Mise en oeuvre des tests d'impacts sur ces éprouvettes et résultats

On a utilisé la tour de chute illustrée à la figure 6, en dessous de laquelle est visible un conduit selon l'invention de type de celui illustré à la figure 1 destiné à être soumis à ces tests d'impact. On a utilisé un impacteur sphérique de diamètre égal à 16 mm (le rayon de l'impacteur étant supérieur au rayon de chaque dépression hémicylindrique pour les éprouvettes A et B), en faisant varier l'énergie d'impact suivant la loi de mécanique bien connue E = m. g. z (où m est la masse, g l'accélération de la pesanteur et z la hauteur de chute). On a choisi une hauteur de chute z constante de 1 m, pour lâcher des masses m de valeur croissante sur les éprouvettes précitées, posées (soit à plat, soit en appui sur deux supports espacés pour des impacts en flexion) en dessous de la tour de chute, l'objectif étant dans les tests d'impacts de déterminer la valeur d'énergie d'impact limite au-delà de laquelle chaque éprouvette laisse apparaître un dommage visible tel qu'une fissure ou cassure de chaque éprouvette.

### Premières éprouvettes selon la figure 7 :

Les tests d'impact réalisés sur les premières éprouvettes présentant une grande face texturée selon le premier mode de l'invention ont montré une énergie d'impact limite avant dommages visibles améliorée, comparée à celle des premières éprouvettes lisses de même épaisseur, ce qui témoigne d'une résistance aux impacts améliorée par rapport à ces dernières.

### Secondes éprouvettes A1-A6 selon les figures 8-9 :

Le tableau 7 ci-dessous détaille les résultats des essais réalisés pour chaque éprouvette A1 à A6, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 7]**

| Eprouvette | Energie d'impact (J) | Statut impact n°1 | Commentaire impact n°1 | Statut impact n°2 | Commentaire impact n°2 |
|---|---|---|---|---|---|
| A1 | 3,0 | Bon | Trace sur côté extérieur | Bon | Trace sur côté extérieur |
| A2 | 3,5 | Bon | Trace sur | Bon | Trace sur |

| | | | côté extérieur | | côté extérieur |
|---|---|---|---|---|---|
| A3 | 4,0 | Mauvais | Casse complète | - | - |
| A4 | 3,7 | Mauvais | Casse complète | - | - |
| A5 | 3,6 | Mauvais | Casse complète | - | - |
| A6 | 3,5 | Bon | Trace sur côté extérieur | Bon | Trace sur côté extérieur |

Le tableau 7 montre que l'énergie d'impact limite avant la rupture pour les éprouvettes A1-A6 était de 3,5 J.

### Secondes éprouvettes B1-B9 selon les figures 10-11 :

Le tableau 8 ci-dessous détaille les résultats des essais réalisés pour chaque éprouvette B1 à B9, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 8]**

| Eprouvette | Energie d'impact (J) | Statut impact n°1 | Commentaire impact n°1 | Statut impact n°2 | Commentaire impact n°2 |
|---|---|---|---|---|---|
| B1 | 3,0 | Bon | Trace sur côté extérieur sensible au toucher | Bon | Trace sur côté extérieur |
| B2 | 3,2 | Bon | Trace sur côté extérieur | Bon | Trace sur côté extérieur |
| B3 | 3,5 | Bon | Trace sur côté extérieur | Bon | Trace sur côté extérieur |
| B4 | 3,6 | Bon | Trace sur côté extérieur sensible au toucher | Bon | Trace sur côté extérieur |
| B5 | 4,0 | Mauvais | Casse complète | - | - |
| B6 | 3,7 | Bon | Trace sur côté extérieur | Bon | Trace sur côté extérieur |
| B7 | 3,8 | Bon | Trace sur côté extérieur | Bon | Trace sur côté extérieur |
| B8 | 3,9 | Mauvais | Casse complète | - | - |
| B9 | 3,8 | Bon | Trace sur côté extérieur | Bon | Trace sur côté extérieur |

Le tableau 8 montre que l'énergie d'impact limite avant la rupture pour les éprouvettes B1-B9 était de 3,8 J.

### Eprouvettes « témoin » C1-C6 selon la figure 12 :

Le tableau 9 ci-dessous détaille les résultats des essais réalisés pour chaque éprouvette C1 à C6, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 9]**

| Eprouvette | Energie d'impact (J) | Statut impact n°1 | Commentaire impact n°1 | Statut impact n°2 | Commentaire impact n°2 |
|---|---|---|---|---|---|
| C1 | 3,5 | Mauvais | Casse complète | - | - |
| C2 | 3,0 | Mauvais | Casse complète | - | - |
| C3 | 2,5 | Mauvais | Casse partielle | - | - |
| C4 | 2,0 | Bon | Pas de marque | Mauvais | Casse complète |
| C5 | 2,0 | Bon | Trace sur côté extérieur | Mauvais | Casse partielle |
| C6 | 2,0 | Mauvais | Casse partielle | - | - |

Le tableau 9 montre que l'énergie d'impact limite avant la rupture pour les éprouvettes C1-C6 était inférieure à 2,0 J.

### Eprouvettes « témoin » D1-D6 selon la figure 13 :

Le tableau 10 ci-dessous détaille les résultats des essais réalisés pour chaque éprouvette D1 à D6, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 10]**

| Eprouvette | Energie d'impact (J) | Statut impact n°1 | Commentaire impact n°1 | Statut impact n°2 | Commentaire impact n°2 |
|---|---|---|---|---|---|
| D1 | 2,0 | Mauvais | Fissure intérieure | - | - |
| D2 | 2,0 | Bon | Trace sur côté extérieur | Mauvais | Fissure intérieure |
| D3 | 2,0 | Bon | Trace sur côté extérieur | Bon | Trace sur côté extérieur |
| D4 | 2,5 | Bon | Trace sur côté extérieur | Mauvais | Casse complète |
| D5 | 2,5 | Mauvais | Casse complète | - | - |
| D6 | 2,5 | Bon | Trace sur côté extérieur | Bon | Trace sur côté extérieur |

Le tableau 10 montre que l'énergie d'impact limite avant la rupture pour les éprouvettes D1-D6 était de 2,0 J.

### Eprouvettes « témoin » E1-E5 selon la figure 14 :

Le tableau 11 ci-dessous détaille les résultats des essais réalisés pour chaque éprouvette E1 à E5, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 11]**

| Eprouvette | Energie d'impact (J) | Statut impact n°1 | Commentaire impact n°1 | Statut impact n°2 | Commentaire impact n°2 |
|---|---|---|---|---|---|
| E1 | 2,5 | Bon | Trace sur côté extérieur | Bon | Trace sur côté extérieur |
| E2 | 3,0 | Bon | Trace sur côté extérieur | Bon | Trace sur côté extérieur |
| E3 | 3,5 | Bon | Trace sur côté extérieur | Bon | Trace sur côté extérieur |
| E4 | 4,0 | Bon | Trace sur côté extérieur | Mauvais | Casse complète |
| E5 | 4,0 | Mauvais | Casse complète | - | - |

Le tableau 11 montre que l'énergie d'impact limite avant la rupture pour les éprouvettes E1-E5 était compris entre 3,5 et 4,0 J.

### Eprouvettes « témoin » F1-F5 selon la figure 15 :

Le tableau 12 ci-dessous détaille les résultats des essais réalisés pour chaque éprouvette F1 à F5, en termes d'énergie d'impact, de statut de l'éprouvette (bon ou mauvais état) après un premier impact et éventuellement après un second impact pour une énergie d'impact donnée, et d'identification des dommages visibles après chaque impact (commentaires concernant le côté extérieur texturé impacté de chaque éprouvette, pour autant qu'elle ne soit pas cassée suite à chaque impact).

**[Tableau 12]**

| Eprouvette | Energie d'impact (J) | Statut impact n°1 | Commentaire impact n°1 | Statut impact n°2 | Commentaire impact n°2 |
|---|---|---|---|---|---|
| F1 | 5,0 | Bon | Trace sur côté extérieur | Bon | Trace sur côté extérieur |
| F2 | 6,0 | Bon | Trace sur côté extérieur | Bon | Trace sur côté extérieur |
| F3 | 8,0 | Mauvais | Casse complète | - | - |
| F4 | 7,0 | Bon | Trace sur côté extérieur | Bon | Trace sur côté extérieur |
| F5 | 7,5 | Mauvais | Casse complète | - | - |

Le tableau 12 montre que l'énergie d'impact limite avant la rupture pour les éprouvettes F1-F5 était compris entre 7,0 et 7,5 J.

Ces essais montrent que les surfaces texturées selon les figures 7-11 permettent pour des pièces selon l'invention de retarder l'apparition d'une fissure suite à des impacts reçus, par l'écrasement du relief formé par les crêtes et les dépressions lors de l'amortissement de ces impacts en comparaison de pièces lisses d'épaisseur analogue, et de déclencher un contrôle précoce de la pièce texturée selon l'invention.

En particulier, les tableaux 7 et 8 montrent que les surfaces texturées selon le second mode de l'invention confèrent aux éprouvettes A et B les incorporant une énergie d'impact limite avant rupture nettement augmentée et donc une résistance aux impacts améliorée de manière significative, en comparaison des éprouvettes C et D d'épaisseurs analogues allant de 2 mm à 3 mm (voir tableaux 9 et 10).

Le tableau 11 montre qu'il faut augmenter jusqu'à 4 mm l'épaisseur des éprouvettes « témoin » (voir l'éprouvette E) pour obtenir une énergie d'impact limite avant rupture analogue (comprise entre 3,5 et 4,0 J), soit un gain de masse d'environ 25 % pour les pièces A et B selon les deux modes de l'invention.

Ces résultats montrent également une augmentation de l'énergie d'impact limite avant rupture avec l'épaisseur des éprouvettes (voir tableaux 7-8 pour les éprouvettes A et B, et tableaux 9-12 pour les éprouvettes C-F).

Les résultats des tableaux 7-8 pour le second mode de surface texturée selon l'invention montrent en outre que l'espacement des crêtes et dépressions suivant une période de répétition élevée (i.e. une fréquence ou pas de répétition réduit procurant un agencement plus espacé des crêtes/ dépressions) constitue un exemple préférentiel de réalisation de l'invention, vu que l'énergie d'impact limite avant rupture est de 3,8 J pour les figures 10-11 contre 3,5 J pour les figures 8-9.

Cet exemple préférentiel de l'invention des figures 10-11 se traduit en particulier par un « dénivelé » (i.e. différence d'épaisseur entre les crêtes et les fonds des dépressions) plus élevé et par une épaisseur de pièce augmentée en comparaison de la variante de l'invention des figures 8 et 9.

## Revendications

1. Pièce moulée à matrice thermoplastique apte à constituer un conduit (1, 1') équipant un véhicule aérien ou spatial, la pièce présentant une surface externe (2, 2') au moins en partie à symétrie de révolution, dans laquelle la surface externe comprend une multitude de dépressions (6, 6') venues de moulage et reliées deux à deux entre elles par des crêtes (7, 7') et dans laquelle:
- chacune des dépressions présente une surface concave globalement sphérique ou cylindrique et une dimension transversale maximale D entre les crêtes deux à deux adjacentes comprise entre 3 mm et 10 mm, mesurée dans une direction d perpendiculaire aux crêtes délimitant chaque dépression, et
- chacune des crêtes présente un sommet de largeur transversale L mesurée suivant ladite direction d, avec L < D.

2. Pièce selon la revendication 1, dans laquelle chacune des dépressions (6, 6') présente ladite surface concave avec L < 0,5 D et par exemple L < 0,2 D.

3. Pièce selon la revendication 1 ou 2, dans laquelle la surface concave est définie par un rayon de courbure R relié à ladite dimension transversale maximale D par 0,5 D < R < 2 D, de préférence 0.7 D < R < 1,5 D.

4. Pièce selon une des revendications précédentes, dans laquelle la pièce présente une différence d'épaisseur, mesurée entre chacune des crêtes (7, 7') et un fond (6a) des dépressions (6, 6') adjacentes, de la surface externe (2, 2') à une surface interne (5, 5') de la pièce radialement opposée, comprise entre 0,2 mm et 2 mm, de préférence entre 0,3 mm et 1,3 mm.

5. Pièce selon une des revendications précédentes, dans laquelle les dépressions (6, 6') sont identiques et régulièrement espacées en formant au moins une rangée périphérique de dépressions entre deux extrémités ouvertes (3, 3' et 4, 4') de la pièce, la ou chaque rangée s'étendant sur un pourtour de la surface externe (2, 2') avec un pas de répétition de valeur égale à D+L entre deux dépressions consécutives dans la ou chaque rangée.

6. Pièce selon les revendications 4 et 5, dans laquelle ladite différence d'épaisseur de la pièce est comprise entre :
- 0,8 mm et 1,3 mm lorsque ledit pas entre dépressions (6, 6') est compris entre 6 mm et 8 mm avec de préférence 0.7 D < R < D, ou
- 0,3 mm et 0,7 mm lorsque ledit pas entre dépressions (6, 6') est compris entre 3 mm et 5 mm avec de préférence D < R < 1,3 D.

7. Pièce selon la revendication 5 ou 6, dans laquelle les dépressions (6, 6') forment plusieurs dites rangées périphériques espacées sur la surface externe (2, 2'), les dépressions de chaque rangée présentant chacune ladite surface concave globalement sphérique et étant formées de manière discontinue sur la surface externe à la manière d'alvéoles d'une balle de golf.

8. Pièce selon la revendication 5 ou 6, dans laquelle les dépressions (6, 6') forment une rangée périphérique sur la surface externe (2, 2'), les dépressions de ladite rangée présentant chacune ladite surface concave globalement hémicylindrique et continue sur la surface externe.

9. Pièce selon une des revendications précédentes, dans laquelle la pièce est moulée par injection et présente deux extrémités ouvertes (3, 3' et 4, 4') qui présentent chacune indépendamment l'une de l'autre un pourtour d'extrémité globalement circulaire, elliptique ou polygonal.

10. Pièce selon une des revendications précédentes, dans laquelle la pièce est constituée d'une composition polymérique à base d'au moins un polymère thermoplastique choisi parmi les polyamides (PA), les poly(sulfure de phénylène) (PPS), les polyétherimides (PEI), les polyphtalamides (PPA), les polyphénylsulfones (PPSU), les polyétheréthercétones (PEEK), les polyaryléthercétones (PAEK), les polyfluorures de vinylidène (PVDF).

11. Pièce selon la revendication 10, dans laquelle la composition comprend un renfort comprenant :
- une charge renforçante dispersée dans la composition, par exemple choisie parmi les charges organiques telles que les noirs de carbone et les nanotubes de carbone et les charges inorganiques, et/ou
- des fibres de renforcement par exemple choisies parmi les fibres de verre et les fibres de carbone formant un renforcement unidirectionnel ou tissé,
le renfort comprenant de préférence des fibres de verre discontinues par exemple selon une fraction massique comprise entre 20 et 40 %.

12. Procédé de fabrication d'une pièce selon une des revendications précédentes, dans lequel on met en oeuvre une étape de moulage par injection, dans un moule configuré pour former en négatif lesdites dépressions (6, 6') et lesdites crêtes (7, 7'), d'une composition polymérique comprenant ladite matrice thermoplastique et éventuellement un renfort comprenant une charge renforçante dispersée dans la composition et/ou des fibres de renforcement.

13. Conduit (1, 1') pour véhicule aérien ou spatial, le conduit étant configuré pour être monté à l'intérieur du véhicule en y véhiculant un fluide liquide ou gazeux, dans lequel le conduit comprend ou est constitué d'une pièce selon une des revendications 1 à 11 qui est apte à résister à une fissuration de la pièce due à des impacts d'outils lors d'opérations d'installation ou de maintenance à proximité du conduit.

14. Conduit (1, 1') selon la revendication 13, dans lequel le conduit forme une prise d'air pour une unité de climatisation du véhicule de sorte à alimenter en air climatisé au moins une cabine ou habitacle du véhicule, le conduit comprenant :
- une première extrémité ouverte (3, 3') de pourtour globalement circulaire ou elliptique, adaptée pour être raccordée de manière étanche à une canalisation de l'unité de climatisation débouchant à l'intérieur de la cabine ou habitacle, et
- une seconde extrémité ouverte (4, 4') qui présente une section élargie par rapport à celle de la première extrémité et de pourtour par exemple globalement polygonal ou oblong, qui est adaptée pour être raccordée à un échangeur thermique air-air du véhicule, par exemple externe à la cabine ou habitacle.

15. Conduit (1, 1') selon la revendication 14, dans lequel le conduit présente une section de passage qui croît de la première extrémité (3, 3') à la seconde extrémité (4, 4'), le conduit étant pourvu de moyens de raccordement à ladite unité de climatisation.

## Patentansprüche

1. Formteil mit thermoplastischer Matrix, das dafür geeignet ist, eine Leitung (1, 1') zu bilden, mit der ein Luft- oder Raumfahrzeug ausgestattet ist, wobei das Teil eine Außenfläche (2, 2') aufweist, die wenigstens teilweise rotationssymmetrisch ist, wobei die Außenfläche eine Vielzahl von Vertiefungen (6, 6') umfasst, die vom Formen stammen und paarweise durch Grate (7, 7') miteinander verbunden sind, und wobei:
- jede der Vertiefungen eine allgemein kugelförmige oder zylindrische konkave Oberfläche und eine maximale Querabmessung D zwischen den paarweise benachbarten Graten zwischen 3 mm und 10 mm aufweist, gemessen in einer Richtung d senkrecht zu den Graten, die jede Vertiefung begrenzen, und
- jeder der Grate einen Scheitel mit einer Querbreite L aufweist, gemessen in der Richtung d, wobei L < D ist.

2. Formteil nach Anspruch 1, wobei jede der Vertiefungen (6, 6') die konkave Fläche mit L < 0,5 D und zum Beispiel L < 0,2 D aufweist.

3. Formteil nach Anspruch 1 oder 2, wobei die konkave Fläche durch einen Krümmungsradius R definiert ist, der mit der maximalen Querabmessung D durch 0,5 D < R < 2 D, bevorzugt 0,7 D < R < 1,5 D, verbunden ist.

4. Formteil nach einem der vorhergehenden Ansprüche, wobei das Teil einen Dickenunterschied, gemessen zwischen jedem der Grate (7, 7') und einem Boden (6a) der benachbarten Vertiefungen (6, 6') von der Außenfläche (2, 2') zu einer radial gegenüberliegenden Innenfläche (5, 5') des Teils, zwischen 0,2 mm und 2 mm, bevorzugt zwischen 0,3 mm und 1,3 mm, aufweist.

5. Formteil nach einem der vorhergehenden Ansprüche, wobei die Vertiefungen (6, 6') identisch und regelmäßig beabstandet sind, indem sie wenigstens eine umlaufende Reihe von Vertiefungen zwischen zwei offenen Enden (3, 3' und 4, 4') des Teils bilden, wobei sich die oder jede Reihe über einen Umfang der Außenfläche (2, 2') mit einem Wiederholungsabstand mit einem Wert gleich D+L zwischen zwei aufeinanderfolgenden Vertiefungen in der oder jeder Reihe erstreckt.

6. Formteil nach den Ansprüchen 4 und 5, wobei der Unterschied in der Dicke des Teils beträgt:
- 0,8 mm bis 1 mm, wenn der Abstand zwischen den Vertiefungen (6, 6') zwischen 6 mm und 8 mm liegt, mit bevorzugt 0,7 D < R < D, oder
- 0,3 mm bis 0,7 mm, wenn der Abstand zwischen den Vertiefungen (6, 6') zwischen 3 mm und 5 mm liegt, mit bevorzugt D < R < 1,3 D.

7. Formteil nach Anspruch 5 oder 6, wobei die Vertiefungen (6, 6') mehrere sogenannte Umfangsreihen bilden, die auf der Außenfläche (2, 2') zueinander beabstandet sind, wobei die Vertiefungen in jeder Reihe jeweils die allgemein kugelförmige konkave Oberfläche aufweisen und auf der Außenfläche diskontinuierlich in der Art von Waben eines Golfballs ausgebildet sind.

8. Formteil nach Anspruch 5 oder 6, wobei die Vertiefungen (6, 6') eine umlaufende Reihe auf der Außenfläche (2, 2') bilden, wobei die Vertiefungen der Reihe jeweils die allgemein halbkugelförmige konkave Oberfläche aufweisen und kontinuierlich auf der Außenfläche verlaufen.

9. Formteil nach einem der vorhergehenden Ansprüche, wobei das Teil spritzgegossen ist und zwei offene Enden (3, 3' und 4, 4') aufweist, die jeweils unabhängig voneinander einen im Allgemeinen kreisförmigen, elliptischen oder polygonalen Endumfang aufweisen.

10. Formteil nach einem der vorhergehenden Ansprüche, wobei das Teil aus einer Polymerzusammensetzung auf der Basis von wenigstens einem thermoplastischen Polymer besteht, gewählt aus Polyamiden (PA), Polyphenylensulfiden (PPS), Polyetherimiden (PEI), Polyphthalamiden (PPA), Polyphenylsulfonen (PPSU), Polyetheretherketonen (PEEK), Polyaryletherketonen (PAEK), Polyvinylidenfluoriden (PVDF).

11. Formteil nach Anspruch 10, wobei die Zusammensetzung eine Verstärkung aufweist, umfassend:
- einen in der Zusammensetzung dispergierten verstärkenden Füllstoff, zum Beispiel gewählt aus organischen Füllstoffen wie Carbon Blacks und Carbon Nanotubes und anorganischen Füllstoffen, und/oder
- Verstärkungsfasern, zum Beispiel gewählt aus Glasfasern und Kohlenstofffasern, die eine unidirektionale oder gewebte Verstärkung bilden, wobei die Verstärkung bevorzugt diskontinuierliche Glasfasern beispielsweise in einem Massenanteil zwischen 20 und 40 % umfasst.

12. Verfahren zur Herstellung eines Teils nach einem der vorhergehenden Ansprüche, wobei ein Schritt des Spritzgießens einer Polymerzusammensetzung durchgeführt wird, die die thermoplastische Matrix und gegebenenfalls eine Verstärkung umfasst, die einen in der Zusammensetzung dispergierten verstärkenden Füllstoff und/oder Verstärkungsfasern umfasst, in einer Form, die dazu ausgebildet ist, die Vertiefungen (6, 6') und die Grate (7, 7') negativ auszubilden.

13. Leitung (1, 1') für ein Luft- oder Raumfahrzeug, wobei die Leitung dazu ausgebildet ist, im Inneren des Fahrzeugs angebracht zu werden, indem ein flüssiges oder gasförmiges Fluid darin transportiert wird, wobei die Leitung ein Teil nach einem der Ansprüche 1 bis 11 umfasst oder daraus besteht, das dazu geeignet ist, einer Rissbildung des Teils aufgrund von Werkzeugaufschlägen bei Installations- oder Wartungsarbeiten in der Nähe der Leitung zu widerstehen.

14. Leitung (1, 1') nach Anspruch 13, wobei die Leitung einen Lufteinlass für eine Klimaanlage des Fahrzeugs bildet, so dass wenigstens eine Kabine oder ein Fahrgastraum des Fahrzeugs mit klimatisierter Luft versorgt wird, wobei die Leitung umfasst:
- ein erstes offenes Ende (3, 3') mit insgesamt kreisförmigem oder elliptischem Umfang, das dazu ausgebildet ist, dicht an einen Kanal der Klimaanlage angeschlossen zu werden, der in das Innere der Kabine oder des Fahrgastraums mündet, und
- ein zweites offenes Ende (4, 4'), das einen im Vergleich zum ersten Ende erweiterten Querschnitt und einen z. B. insgesamt polygonalen oder länglichen Umfang aufweist, das dazu ausgebildet ist, mit einem Luft-Luft-Wärmetauscher des Fahrzeugs verbunden zu werden, der z. B. außerhalb der Kabine oder des Fahrgastraums liegt.

15. Leitung (1, 1') nach Anspruch 14, wobei die Leitung einen vom ersten Ende (3, 3') zum zweiten Ende (4, 4') zunehmenden Durchlassquerschnitt aufweist, wobei die Leitung mit Mitteln zum Anschluss an die Klimaanlage versehen ist.

## Claims

1. Moulded thermoplastic-matrix part able to constitute a duct (1, 1') equipping an aerial vehicle or space vehicle, the part having an external surface (2, 2') with symmetry of revolution at least in part, wherein the external surface comprises a multitude of integrally moulded depressions (6, 6') connected in pairs to one another by crests (7, 7'), and wherein:
- each of the depressions has a generally spherical or cylindrical concave surface and a maximum transverse dimension D between the adjacently paired crests of between 3 mm and 10 mm, measured in a direction d perpendicular to the crests delimiting each depression, and
- each of the crests has an apex of transverse width L measured in said direction d, where L < D.

2. Part according to Claim 1, wherein each of the depressions (6, 6') has said concave surface, where L < 0.5 D and, for example, L < 0.2 D.

3. Part according to Claim 1 or 2, wherein the concave surface is defined by a radius of curvature R linked to said maximum transverse dimension D by 0.5 D < R < 2 D, preferably 0.7 D < R < 1.5 D.

4. Part according to one of the preceding claims, wherein the part has a difference in thickness, measured between each of the crests (7, 7') and a bottom (6a) of the adjacent depressions (6, 6'), from the external surface (2, 2') to a radially opposite internal surface (5, 5') of the part, of between 0.2 mm and 2 mm, preferably between 0.3 mm and 1.3 mm.

5. Part according to one of the preceding claims, wherein the depressions (6, 6') are identical and regularly spaced so as to form at least one peripheral row of depressions between two open ends (3, 3' and 4, 4') of the part, the or each row extending over a periphery of the external surface (2, 2') with a repetition pitch having a value equal to D+L between two consecutive depressions in the or each row.

6. Part according to Claims 4 and 5, wherein said difference in thickness of the part is between:
- 0.8 mm and 1.3 mm when said pitch between depressions (6, 6') is between 6 mm and 8 mm, where preferably 0.7 D < R < D, or
- 0.3 mm and 0.7 mm when said pitch between depressions (6, 6') is between 3 mm and 5 mm, where preferably D < R < 1.3 D.

7. Part according to Claim 5 or 6, wherein the depressions (6, 6') form a plurality of said peripheral rows spaced over the external surface (2, 2'), the depressions of each row each having said generally spherical concave surface and being formed discontinuously on the external surface in the manner of golf ball dimples.

8. Part according to Claim 5 or 6, wherein the depressions (6, 6') form a peripheral row on the external surface (2, 2'), the depressions of said row each having said generally semicylindrical concave surface continuously on the external surface.

9. Part according to one of the preceding claims, wherein the part is injection-moulded and has two open ends (3, 3' and 4, 4') which each have, independently of one another, a generally circular, elliptical or polygonal end periphery.

10. Part according to one of the preceding claims, wherein the part is constituted by a polymeric composition based on at least one thermoplastic polymer chosen from among polyamides (PA), poly(phenylene sulfide) (PPS), polyether imides (PEI), polyphthalamides (PPA), polyphenylsulfones (PPSU), polyether ether ketones (PEEK), polyaryl ether ketones (PAEK) and polyvinylidene fluorides (PVDF).

11. Part according to Claim 10, wherein the composition comprises a reinforcement comprising:
- a reinforcing filler dispersed in the composition, for example chosen from among organic fillers, such as carbon blacks and carbon nanotubes, and inorganic fillers, and/or
- reinforcing fibres, for example chosen from among glass fibres and carbon fibres, forming a unidirectional or woven reinforcement,
the reinforcement preferably comprising discontinuous glass fibres, for example in a mass fraction of between 20 and 40%.

12. Method for manufacturing a part according to one of the preceding claims, wherein there is implemented a step of injection-moulding, in a mould configured to negatively form said depressions (6, 6') and said crests (7, 7'), of a polymeric composition comprising said thermoplastic matrix and possibly a reinforcement comprising a reinforcing filler dispersed in the composition and/or reinforcing fibres.

13. Duct (1, 1') for an aerial vehicle or space vehicle, the duct being configured to be mounted within the vehicle while conveying a liquid or gaseous fluid therein, wherein the duct comprises or is constituted by a part according to one of Claims 1 to 11 that is able to resist cracking of the part due to impacts of tools during installation or maintenance operations in the vicinity of the duct.

14. Duct (1, 1') according to Claim 13, wherein the duct forms an air intake for an air-conditioning unit of the vehicle so as to supply conditioned air to at least one cabin or passenger compartment of the vehicle, the duct comprising:
- a first open end (3, 3') of generally circular or elliptical periphery that is designed to be connected in a leaktight manner to a line of the air-conditioning unit opening inside the cabin or passenger compartment, and
- a second open end (4, 4') which has a widened cross section with respect to that of the first end and, for example, a generally polygonal or oblong periphery, which is designed to be connected to an air-air heat exchanger of the vehicle, for example external to the cabin or passenger compartment.

15. Duct (1, 1') according to Claim 14, wherein the duct has a passage cross section that increases from the first end (3, 3') to the second end (4, 4'), the duct being provided with means of connection to said air-conditioning unit.
